# EUROPEAN PATENT SPECIFICATION

(11) **EP 4 227 711 B1**
(45) Date of publication and mention of the grant of the patent: **09.09.2026**
(21) Application number: 23155629.1
(22) Date of filing: 08.02.2023
(51) Int. Cl.: G01S 13/88, G01S 13/04, G01S 7/40, G05B 15/02

(54) **METHOD FOR CONTROLLING ELECTRIC OR ELECTRONIC DEVICES IN DIFFERENT ZONES OF A ROOM OR AREA**
VERFAHREN ZUR STEUERUNG VON ELEKTRISCHEN ODER ELEKTRONISCHEN GERÄTEN IN VERSCHIEDENEN ZONEN EINES RAUMES ODER GEBIETES
PROCÉDÉ DE COMMANDE D'APPAREILS ÉLECTRIQUES OU ÉLECTRONIQUES DANS DIFFÉRENTES ZONES D'UNE PIÈCE OU D'UNE RÉGION

(30) Priority: 10.02.2022 BE 202205087
(43) Date of publication of application: 16.08.2023
(73) Proprietor: Niko NV, 9100 Sint-Niklaas (BE)
(72) Inventor: DEVENYN, Diederik, 9820 Merelbeke (BE); DELEUS, Willem, 3190 Boortmeerbeek (BE)
(74) Representative: Calysta NV

(56) References cited:
- US-A1- 2021 055 378
- US-A1- 2021 321 222

## Description

### Technical field of the invention

The present invention relates to a method for controlling electric or electronic devices in different zones in a room or area. More particularly, the present invention relates to a method for triggering the start of an action of at least one electric or electronic device based on presence, movement or activity in at least one particular zone of an area or a room of a building using a radar sensor.

### Background of the invention

Houses comprise a lot of electric and electronic devices to be controlled in one way or another. Usually, a user can manually control these electric or electronic devices to be activated by a push button, a rotary button or the like.

However, todays technology uses a lot of further techniques to control such lighting devices, such as, for example, sensor devices. Sensors are provided at different locations in the house or building to detect presence of persons.

Upon the detection of a person, particular electric or electronic devices can be activated. However, upon such detection of a person in a room, electric or electronic devices in the entire room are activated, where sometimes this is not necessary and only devices in a particular part of the room need to be activated.

Techniques are known to divide rooms in different zones in order to be able to locate a person in a room. An example is given in US 2021/0321222, which describes systems and methods for mapping a given environment in terms of determining a functional identity of a zone in the given environment and an identity of one or more of an outer boundary or an inner boundary in the given environment. Further, the method may also comprise monitoring or tracking a body in the given environment, which may or may not have been mapped. Monitoring the body can include determining deviations from a baseline pattern for the purpose of medical diagnosis, for example. Hence, by a method as described in US 2021/0321222 it is possible to detect the presence of a person and the location where this person is.

However, when a person is detected in a room, according to prior art systems, electric or electronic devices will still be activated in the entire room, unless different sensors are present which are linked to different locations in the room.

### Summary of the invention

The present invention provides a method for controlling at least one electric or electronic device in each of at least two different zones of a room or area in a house or building. The method comprises, in a first step, defining the boundaries of the at least two different zones in the room or area. Defining boundaries of the at least two different zones can be done with any method known by a person skilled in the art.

The method further comprises detecting whether there is activity within each of the at least two different zones, i.e. detecting activity within the defined boundaries of at least one of the at least two different zones of the room or area with a single radar sensor, and if activity is detected within the defined boundaries of one of the at least two different zones, based on the detected activity, controlling at least one electric or electronic device only in that at least one zone where the activity was detected. According to embodiments of the invention, the at least two different zones may be neighbouring zones.

According to other embodiments of the invention, the at least two different zones may be non-neighbouring zones.

Within the scope of the invention, with activity is meant presence of at least one person, movement, activity and/or human gestures detected by the radar sensor.

An advantage of a method according to embodiments of the invention is that only one radar sensor is required for differentiating between different zones in a room or area in a house or building for detecting activity in that at least one zone to trigger the start of an action of at least one electric or electronic device. Thus, according to embodiments of the invention, by defining and storing the boundaries of the different zones, it is possible to control these different zones of a room or area separately with only one radar sensor. Of course, it is also still possible to control multiple or all zones in a room or area simultaneously. According to prior art methods, more sensors are require, for example, one sensor per zone may be required to be able to control electric or electronic devices in one zone of a room or area.

According to embodiments of the invention, the radar sensor may be integrated in a controlling device, such as for example a switch, located in the room or area of the building.

According to other embodiments, the radar sensor may be a standalone sensor device.

Method according to any of the previous claims, wherein defining the boundaries of the at least two different zones in the room or area comprises tracking a path of a moving target through and/or around predefined boundaries of the at least two different zones, and from the tracked path, define the boundaries of the at least two different zones.

According to other embodiments, defining the boundaries of the at least two different zones in the room or area may be done manually in an app on a mobile device, such as for example a mobile phone or tablet, or via a software tool e.g. on a computer.

According to further embodiments of the invention, the method may furthermore comprise defining one or more zones of the at least one zone where activities are to be ignored, and thus no actions need to be started when activities are detected.

According to still further embodiments of the invention, the method may furthermore comprise manually overruling the controlling of the at least one electric or electronic device in one or more of the at least one zone.

### Brief description of the drawings

It has to be noted that same reference signs in the different figures refer to same, similar or analogous elements.

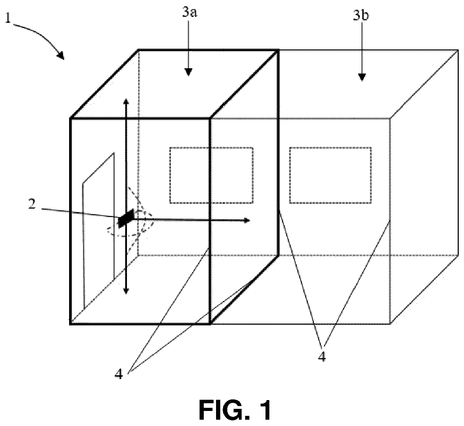

Fig. 1 schematically illustrates a room divided into different zones for performing the method according to embodiments of the invention.

### Description of illustrative embodiments

In the description different embodiments will be used to describe the invention. Therefore reference will be made to different drawings. It has to be understood that these drawings are intended to be non-limiting, the invention is only limited by the claims. The drawings are thus for illustrative purposes, the size of some of the elements in the drawings may be exaggerated for clarity purposes.

The term "comprising" is not to be interpreted as limiting the invention in any way. The term "comprising", used in the claims, is not intended to be restricted to what means is described thereafter; it does not exclude other elements, parts or steps.

The term "connected" as used in the claims and in the description has not to be interpreted as being restricted to direct connections, unless otherwise specified. Thus, part A being connected to part B is not limited to part A being in direct contact to part B, but also includes indirect contact between part A and part B, in other words also includes the case where intermediate parts are present in between part A and part B.

The present invention provides a method for controlling at least one electric or electronic device in each of at least two different zones of a room or area in a house or building. The method comprises, in a first step, defining the boundaries of each of the at least two different zones in the room or area, detecting, with a single radar sensor, whether there is activity within the defined boundaries of each of the at least two different zones of the room or area, and based on the detected activity, controlling at least one electric or electronic device only in that at least one zone where the activity was detected.

Within the scope of the invention, with activity is meant presence of at least one person, movement, activity and/or human gestures detected by the radar sensor.

With controlling an electric or electronic device is meant activating the electric or electronic device. Activating the electric or electronic device can, according to embodiments of the invention, be just putting or switching on or off the electric or electronic devices. For example, activating may comprise, upon detecting activity in the particular zone, switching on or off the lights, activating or deactivating the air conditioning, putting on or off the heating, putting down or up the roller blades, ... only in that zone. However, according other embodiments of the invention, controlling the electric or electronic devices may also comprise activating a particular mood, instead of just switching on or off an electric or electronic device. An example of such mood is, for example, when at 8 PM activity is detected in zone "living room at the location of the couch", the mood can be dimming the lights, closing the roller blinds and putting the heat one or two degrees higher.

An advantage of a method according to embodiments of the invention is that only one radar sensor is required for differentiating between different zones in a room or area in a house or building for detecting activity in that at least one zone to trigger the start of an action of at least one electric or electronic device. Thus, according to embodiments of the invention, by defining and storing the boundaries of the different zones, it is possible to control these different zones of a room or area separately with only one radar sensor. Of course, it is also still possible to control multiple or all zones in a room or area simultaneously. According to prior art methods, more sensors are require, for example, one sensor per zone may be required to be able to control electric or electronic devices in one zone of a room or area.

The present invention will hereinafter be described by means of different embodiments.

Fig. 1 schematically illustrates a room or area 1 in a building. In the room or area 1, a radar sensor 2 is provided. The radar sensor 2 may, according to embodiments of the invention, be part of a control device, such as e.g. a switch, or may be a standalone device. The room 1 is divided into at least two different zones 3a, 3b. In the example of Fig. 1, the room may be divided into two different zones 3a, 3b. It has to be understood that Fig. 1 is only used to illustrate how the room or area 1 may be divided into different zones 3a, 3b and is not intended to limit the invention in any way. According to embodiments of the invention, depending on the size of the room or area 1 the method will be performed in, the room or area 1 may be divided into any number of zones 3a, 3b as required by a user. For example, a living room may, for example, be divided in three zones, a zone at the location of the dining table, a zone at the location f the couches and a zone at the location of the desk that is present in the living room. However, any number of zones can be defined in a room or area in a building as deemed necessary by a user.

Dividing the room or area 1 into at least two different zones 3a, 3b is done by defining the boundaries 4 of the at least two zones 3a, 3b. This can be done in any suitable way as known by a person skilled in the art. According to embodiments of the invention, defining the boundaries 4 of the at least two zones 3a, 3b can be done using the radar sensor 2. In this case, defining the boundaries 4 of the at least two zones 3a, 3b may be part of the calibration of the radar sensor 2. Defining the boundaries 4 of the at least two zones 3a, 3b may, according to embodiments of the invention, done by tracking a path of at least one moving target e.g. of a person walking around in the room 1. Thereby, the moving target follows the required boundaries 4 of the at least two zones 3a, 3b. A processor, which may be provided in the control device, when the radar sensor 2 is part of such a control device, or which is part of the standalone radar sensor 2 may be adapted to, from the tracked path, determine and store the boundaries 4 of the at least two zones 3a, 3b in the room or area 1.

According to other embodiments, defining the boundaries 4 of the at least two zones 3a, 3b may also be done manually in an app on a tablet or a smartphone, or via a software tool on e.g. a tablet or a computer. In this case, the boundaries 4 can, for example, be manually indicated on a floorplan of the room or area 1 and be stored therein.

According to embodiments of the invention, the whole room or area 1 is divided into different zones 3a, 3b. In that case, all defined zones 3a, 3b may be neighbouring zones. However, according to other embodiments, at least two different zones 3a, 3b may be defined which are not neighbouring zones. This may be the case when only zones 3a, 3b are defined where electric or electronic devices to be controlled are located. Hence, according to these embodiments, particular zones in the room or area 2 may of no interest for a user.

According to still other embodiments, after defining the at least two different zones 3a, 3b, some zones which are of no interest for the user, can be indicated as "to be ignored". In other words, these zones can be indicated so that, when activity is measured there, no action should be taken, or no electric or electronic devices should triggered to be activated.

Once the boundaries 4 are defined and stored, system is ready to be used. In case the boundaries 4 were defined by means of a radar sensor 2, this has as an advantage that the radar sensor is already ready for being used. If defining the boundaries 4 of the at least two zones 3a, 3b had been done manually by means of an app or by any other suitable method, it might be required that the radar sensor 2 is first calibrated before use. When the radar sensor 2 detects activity in one or more of the at least two zones 3a, 3b, at least one electric or electronic device will be controlled only in that at least one zone 3a, 3b where the activity was detected. Hence, the measured activity in the at least one zone 3a, 3b triggers the start of an action of at least one electric or electronic device in the at least one zone of at least two different zones 3a, 3b of a room or area 1.

Within the scope of the present invention, with activity is meant presence of at least one person, movement, activity and/or human gestures detected by the radar sensor 2.

With controlling an electric or electronic device is meant, for example but not limited to, when activity is detected by the radar sensor 2, putting on the lights in the at least one zone 3a, 3b where activity was detected, or, if the zone 3a, 3b where activity is detected is for example near a window, shutting the blinds in the evening, or if activity is triggered in a zone where a seat is located, dim the light to a certain percentage, etc.

Hence, when the radar sensor 2 detects activity in at least one of the at least two zones 3a, 3b, a signal is sent to the relevant electric or electronic device, directly or via a controller of a home automation system, to activate the electric or electronic device.

Hence, in that way, electric or electronic devices can be locally controlled, i.e. in a particular zone. An advantage of the method according to embodiments of the invention is that only one radar sensor is required for activating or controlling an electric or electronic device in one particular or required zone 3a, 3b. According to embodiments of the invention, also electric or electronic devices in still more than one zone 3a, 3b can be simultaneously activated, if activity is detected in those zones 3a, 3b.

According to embodiments of the invention, it may also be possible to overrule the controlling of the at least one electric or electronic device in one or more of the at least one zone 3a, 3b. Hence, when, for example, detection of activity in a zone 3a, 3b leads to putting on the lights in that zone 3a, 3b, a user can still manually putting the lights off, if he or she doesn't want to have the lights on. This can be done by pushing the switch button that controls het lighting device in that zone 3a, 3b.

## Claims

1. Method for controlling at least one electric or electronic device in each of at least two different zones (3a, 3b) of a room or area (1) in a house or building, the method comprising in a first step, defining the boundaries (4) of the at least two different zones in the room or area (1),
**characterized in that** the method further comprises:
- detecting activity in each of the at least two different zones (3a, 3b) of the room or area (1) with a single radar sensor (2), and
- if activity is detected within the defined boundaries of one of the at least two different zones (3a, 3b), based on the detected activity, controlling at least one electric or electronic device **in that** at least one zone (3a, 3b) where the activity was detected.

2. Method according to claim 1, wherein defining the boundaries of the at least two different zones (3a, 3b) in the room or area (1) comprises:
- tracking a path of a moving target through and/or around predefined boundaries (4) of the at least two different zones (3a, 3b), and
- from the tracked path, define and store the boundaries (4) of the at least two different zones (3a, 3b).

3. Method according to claim 1, wherein defining the boundaries (4) of the at least two different zones (3a, 3b) in the room or area (1) is done manually in an app on a mobile device or via a software tool.

4. Method according to any of the previous claims, further comprising:
- defining one or more zones (3a, 3b) of the at least two different zones (3a, 3b) where activities are to be ignored.

5. Method according to any of the previous claims, further comprising:
- manually overruling the controlling of the at least one electric or electronic device in one or more of the at least one zone (3a, 3b).

6. Method according to any of the previous claims, wherein the at least two different zones (3a, 3b) are neighbouring zones.

7. Method according to any of claims 1 to 5, wherein the at least two different zones (3a, 3b) are non-neighbouring zones.

8. Method according to any of the previous claims, wherein the radar sensor (2) is integrated in a controlling device located in the room or area (1) of the building.

9. Method according to any of claims 1 to 7, wherein the radar sensor (2) is a standalone sensor device.

## Patentansprüche

1. Verfahren zum Steuern mindestens einer elektrischen oder elektronischen Vorrichtung in jeder von mindestens zwei verschiedenen Zonen (3a, 3b) eines Raums oder Bereichs (1) in einem Haus oder Gebäude, das Verfahren umfassend in einem ersten Schritt das Festlegen der Grenzen (4) der mindestens zwei verschiedenen Zonen in dem Raum oder Bereich (1),
**dadurch gekennzeichnet, dass** das Verfahren ferner Folgendes umfasst:
- Erfassen von Aktivität in jeder der mindestens zwei unterschiedlichen Zonen (3a, 3b) des Raums oder Bereichs (1) mit einem einzigen Radarsensor (2) und
- falls innerhalb der definierten Grenzen einer der mindestens zwei unterschiedlichen Zonen (3a, 3b) Aktivität erfasst wird, basierend auf der erfassten Aktivität das Steuern mindestens einer elektrischen oder elektronischen Vorrichtung in jener mindestens einen Zone (3a, 3b), in der die Aktivität erfasst wurde.

2. Verfahren nach Anspruch 1, wobei das Festlegen der Grenzen der mindestens zwei unterschiedlichen Zonen (3a, 3b) in dem Raum oder Bereich (1) folgendes umfasst:
- Verfolgen einer Bewegungsbahn eines sich bewegenden Ziels durch und/oder um vordefinierte Grenzen (4) der mindestens zwei unterschiedlichen Zonen (3a, 3b) herum, und
- Definieren und Speichern der Grenzen (4) der mindestens zwei unterschiedlichen Zonen (3a, 3b) anhand der verfolgten Bahn.

3. Verfahren nach Anspruch 1, wobei das Festlegen der Grenzen (4) der mindestens zwei unterschiedlichen Zonen (3a, 3b) in dem Raum oder Bereich (1) manuell in einer Anwendung auf einer mobilen Vorrichtung oder über ein Softwaretool erfolgt.

4. Verfahren nach einem der vorstehenden Ansprüche, ferner umfassend:
- Definieren einer oder mehrerer Zonen (3a, 3b) aus den mindestens zwei unterschiedlichen Zonen (3a, 3b), in denen Aktivitäten ignoriert werden sollen.

5. Verfahren nach einem der vorstehenden Ansprüche, ferner umfassend:
- manuelles Übersteuern des Steuerens der mindestens einen elektrischen oder elektronischen Vorrichtung in einer oder mehreren der mindestens einen Zone (3a, 3b).

6. Verfahren nach einem der vorstehenden Ansprüche, wobei die mindestens zwei unterschiedlichen Zonen (3a, 3b) benachbarte Zonen sind.

7. Verfahren nach einem der Ansprüche 1 bis 5, wobei es sich bei den mindestens zwei unterschiedlichen Zonen (3a, 3b) um nicht benachbarte Zonen handelt.

8. Verfahren nach einem der vorstehenden Ansprüche, wobei der Radarsensor (2) in eine Steuervorrichtung integriert ist, die sich in dem Raum oder Bereich (1) des Gebäudes befindet.

9. Verfahren nach einem der Ansprüche 1 bis 7, wobei der Radarsensor (2) eine eigenständige Sensorvorrichtung ist.

## Revendications

1. Procédé de commande d'au moins un dispositif électrique ou électronique dans chacune d'au moins deux zones différentes (3a, 3b) d'une pièce ou d'un espace (1) dans une maison ou un bâtiment, le procédé comprenant dans une première étape, la définition des limites (4) des au moins deux zones différentes dans la pièce ou l'espace (1), **caractérisé en ce que** le procédé comprend en outre :
- la détection d'une activité dans chacune des au moins deux zones différentes (3a, 3b) de la pièce ou de l'espace (1) avec un seul capteur radar (2), et
- si une activité est détectée dans les limites définies de l'une des au moins deux zones différentes (3a, 3b), sur la base de l'activité détectée, la commande d'au moins un dispositif électrique ou électronique dans cette au moins une zone (3a, 3b) où l'activité a été détectée.

2. Procédé selon la revendication 1, dans lequel la définition des limites des au moins deux zones différentes (3a, 3b) dans la pièce ou l'espace (1) comprend :
- le fait de suivre une trajectoire d'une cible mobile à travers et/ou autour de limites prédéfinies (4) des au moins deux zones différentes (3a, 3b), et
- à partir de la trajectoire suivie, la définition et le stockage des limites (4) des au moins deux zones différentes (3a, 3b).

3. Procédé selon la revendication 1, dans lequel la définition des limites (4) des au moins deux zones différentes (3a, 3b) dans la pièce ou l'espace (1) se fait manuellement par le biais d'une application sur un dispositif mobile ou via un outil logiciel.

4. Procédé selon l'une quelconque des revendications précédentes, comprenant en outre :
- la définition d'une ou de plusieurs zones (3a, 3b) des au moins deux zones différentes (3a, 3b) où des activités doivent être ignorées.

5. Procédé selon l'une quelconque des revendications précédentes, comprenant en outre :
- l'annulation manuelle de la commande de l'au moins un dispositif électrique ou électronique dans une ou plusieurs des au moins une zone (3a, 3b).

6. Procédé selon l'une quelconque des revendications précédentes, dans lequel les au moins deux zones différentes (3a, 3b) sont des zones voisines.

7. Procédé selon l'une quelconque des revendications 1 à 5, dans lequel les au moins deux zones différentes (3a, 3b) sont des zones non voisines.

8. Procédé selon l'une quelconque des revendications précédentes, dans lequel le capteur radar (2) est intégré dans un dispositif de commande situé dans la pièce ou l'espace (1) du bâtiment.

9. Procédé selon l'une quelconque des revendications 1 à 7, dans lequel le capteur radar (2) est un dispositif capteur autonome.
